# EUROPEAN PATENT APPLICATION

(11) **EP 1 745 971 A2**
(43) Date of publication of application: **24.01.2007**
(21) Application number: 06013573.8
(22) Date of filing: 30.06.2006
(51) Int. Cl.: B60K 15/035

(54) **Fuel tank venting arrangement**

(30) Priority: 20.07.2005 US 700779 P; 12.01.2006 US 758505 P
(71) Applicant: TECUMSEH PRODUCTS COMPANY, Tecumseh Michigan 49286 (US)
(72) Inventor: Kirk, David J., Fond du Lac, Wisconsin 54935 (US); Donahue, Ronald J., Fond du Lac, Wisconsin 54935 (US)
(74) Representative: Riebling, Peter

(57) **Abstract**

A fuel tank (22) for small internal combustion engines (18), the fuel tank formed of a pair of lower and upper housing members (26, 28) which are molded from a plastic material and are sealed to one another via heat welding, for example, to define the interior volume (34) of the fuel tank. The lower housing member (26) includes an integral vent tube (78) which extends substantially upwardly within the interior of the fuel tank and includes an open end (82). The upper housing member (28) includes an integral baffle wall (58) projecting downwardly therefrom which defines a baffle chamber (60) in which the upper end (82) of the vent tube is received. The lower housing member additionally includes an integral fitting (80) to which a vent conduit (86) is attached, the fitting in fluid communication with the vent tube. In use, fuel vapors are vented from the fuel tank by passing into the baffle chamber and thence into the open end of the vent tube and through the fitting and vent conduit to a carbon canister or other containment device.

## Description

The present invention relates to small internal combustion engines of the type which are used with lawnmowers, lawn and garden tractors, other utility implements such as snow throwers and generators, and in sport vehicles, for example. In particular, the present invention relates to an arrangement for venting the fuel tanks of such engines.

Small internal combustion engines include fuel tanks for storing liquid fuel which is mixed with air in the carburetor of the engine to provide a fuel/air mixture for combustion within the engine. Typically, the fuel tank is made from metal or from an injection-molded plastic, for example, and is mounted toward the upper portion of the engine such that the liquid fuel within the tank may flow by gravity into the fuel bowl of the carburetor. Typically, the carburetor includes a float-type valve assembly for metering a supply of liquid fuel from the fuel tank into the carburetor float bowl.

It is known that some of the liquid fuel within the fuel tank may vaporize responsive to heat from the running engine or from warm ambient conditions, for example, to form fuel vapors in the space above the liquid fuel. These fuel vapors must be vented from the fuel tank to avoid over-pressurization of the fuel tank. In many known fuel tanks, such vapors are vented directly into the atmosphere through a space or pathway provided between the cooperating threads of the fuel tank cap and the filler neck. Other known fuel tanks employ various types of valve structures for venting fuel vapors to a containment device such as a carbon canister, for example, wherein the fuel vapors are consumed within the engine when the engine is started.

One known fuel tank is made from an injection-molded plastic, and includes a metal vent tube disposed within the interior of the fuel tank. The lower end of the metal tube is bonded to a metal fitting which is threaded into internal threads of a boss which is molded within the lower wall of the fuel tank. The upper end of the metal vent tube is disposed within a baffle wall formed in the top wall of the fuel tank to prevent liquid fuel from being splashed into the upper end of the vent tube, and a conduit is attached to the metal fitting at the lower end of the vent tube. In use, vapors within the fuel tank may pass into the space within the baffle wall, into the upper end of the vent tube, and thence downwardly through the vent tube, the fitting, and the conduit to be vented externally of the fuel tank.

A problem with the foregoing arrangement is that the threaded connection between the metal vent tube fitting and the plastic threads of the fuel tank boss may not be sufficiently durable, and could be prone to eventual leakage due to engine vibrations or other external forces, for example. Also, the foregoing arrangement requires several parts in addition to the fuel tank itself, such as the metal vent tube and the metal fitting, which add manufacturing steps and additional cost to production of the fuel tank.

What is needed is a fuel tank having a venting arrangement which is an improvement over the foregoing.

The present invention provides a fuel tank for small internal combustion engines, the fuel tank formed of a pair of lower and upper housing members which are molded from a plastic material and are sealed to one another via heat welding, for example, to define the interior volume of the fuel tank. The lower housing member includes an integral vent tube which extends substantially upwardly within the interior of the fuel tank and includes an open end. The upper housing member includes an integral baffle wall projecting downwardly therefrom which defines a baffle chamber in which the upper end of the vent tube is received. The lower housing member additionally includes an integral fitting to which a vent conduit is attached, the fitting in fluid communication with the vent tube. In use, fuel vapors are vented from the fuel tank by passing into the baffle chamber and thence into the open end of the vent tube and through the fitting and vent conduit to a carbon canister or other containment device.

Additionally, the fitting of the lower housing member may be provided within a recessed area of the lower housing member such that the connection of the vent conduit to the fitting is hidden from view and protected against external contacts which could potentially disconnect the hose from the fitting. Also, the lower housing member may include an additional recessed groove for receipt of the vent conduit. The filler neck of the fuel tank is integrally formed with the upper housing member and extends downwardly within the interior volume of the fuel tank such that, when fuel is filled into the fuel tank, a vapor space is defined in the upper portion of the fuel tank in which fuel vapors may collect and thence be vented from the fuel tank.

Advantageously, the vent tube and fitting are each integrally formed with the lower housing member, and the baffle wall and filler neck are integrally formed with the upper housing member, thereby reducing the cost of production of the fuel tank and eliminating the need for a plurality of separate components associated with the venting arrangement, such as separate vent tubes and fittings.

In one form thereof, the present invention provides a fuel tank, including at least two housing members joined to one another to define an interior volume therebeween; and an elongated vent tube monolithically formed with one of the housing members and extending therefrom within the interior volume.

In another form thereof, the present invention provides a fuel tank, including at least two housing members joined to one another to define an interior volume therebeween; an elongated vent tube connected to one of the housing members and extending therefrom within the interior volume; and a fuel blocking element disposed within the vent tube and extending within the vent tube along a substantial portion of a length of the vent tube, wherein the fuel blocking element substantially blocks the passage of liquid fuel therethrough into the vent tube and allows the passage therethrough of gaseous fuel vapors when pressure in the fuel tank rises above atmospheric pressure.

The above-mentioned and other features and advantages of this invention, and the manner of attaining them, will become more apparent and the invention itself will be better understood by reference to the following description of embodiments of the invention taken in conjunction with the accompanying drawings, wherein:

Fig. 1 is a perspective view of an exemplary implement, shown herein as a lawnmower, which includes a small internal combustion engine with which the fuel tank of the present invention may be used;

Fig. 2 is a perspective top view of the fuel tank;

Fig. 3 is a perspective bottom view of the fuel tank;

Fig. 4 is a sectional view through the fuel tank, taken along line 4-4 of Fig. 2;

Fig. 5 is a fragmentary view of a portion of the fuel tank of Fig. 4, showing agitation of the fuel within the fuel tank;

Fig. 6 is a fragmentary view of a portion of the fuel tank of Fig. 4, showing a one-way valve integrated into the fuel tank cap;

Fig. 7 is a sectional view of a fuel tank in accordance with another embodiment, showing the fuel tank in an upright orientation; and

Fig. 8 is a sectional view of a fuel tank in accordance with another embodiment, showing the fuel tank in an inverted orientation.

Corresponding reference characters indicate corresponding parts throughout the several views. The exemplifications set out herein illustrate preferred embodiments of the invention, and such exemplifications are not to be construed as limiting the scope of the invention any manner.

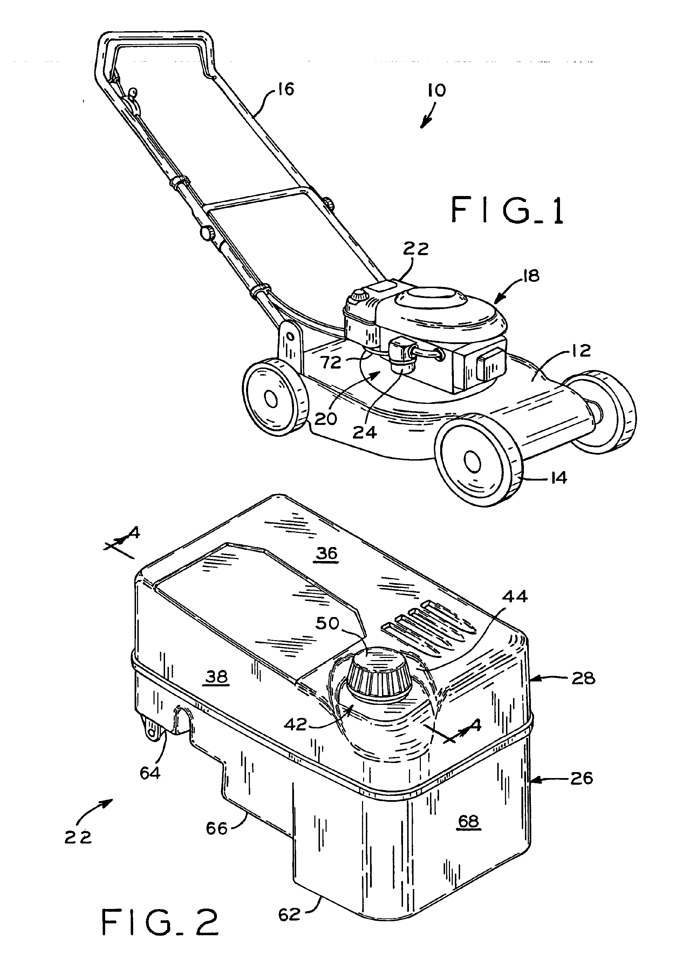

Referring to Fig. 1, an exemplary implement having an engine with which the fuel tank of the present invention may be used is shown as lawnmower 10. Lawnmower 10 generally includes deck 12 having wheels 14, and handle 16 extending upwardly from deck 12 to allow lawnmower 10 to be moved about by an operator. Additionally, lawnmower 10 includes a small one or two cylinder internal combustion engine 18, which may be of the side valve or L-head type, the overhead valve ("OHV") type, or the overhead cam ("OHC") type, such as engines currently manufactured by Tecumseh Products Company of Grafton and New Holstein, Wisconsin. Generally, engine 18 includes a carburetor 20 for providing a fuel/air mixture for combustion within engine 18 to drive the piston/connecting rod/crankshaft assembly (not shown) of engine 18 to rotate a cutting blade (not shown) beneath deck 12 of lawnmower 10.

Engine 18 additionally includes fuel tank 22 mounted thereto for storing a volume of liquid fuel which is supplied to fuel bowl 24 of carburetor 20 in the manner described below. Typically, carburetor 20 includes a float-type valve (not shown) within fuel bowl 24 to meter a supply of liquid fuel from fuel tank 22 into fuel bowl 24. Carburetor 20 may be of the type disclosed in U.S. Patent Nos. 6,152,431, 6,499,726, and 6,513,794, each assigned to the assignee of the present invention, the disclosures of which are incorporated herein by reference.

Referring to Figs. 2-4, fuel tank 22 generally includes lower housing member 26 and upper housing member 28. Lower housing member 26 and upper housing member 28 are each single, monolithic components including the various features described below, and which may each be formed from an injection-molded plastic, such as polyethylene, for example. Lower housing member 26 and upper housing member 28 include mutually facing outer rim surfaces 30 and 32, respectively, which are in abutment with one another and are secured to one another via heat welding, for example, to define an interior volume 34 within fuel tank 22. In addition, outer rim surfaces 30 and 32 may include suitable overlapping and/or interlocking features. Although fuel tank 22 is shown and described herein as including lower and upper housing members 26 and 28 joined to one another along a substantially horizontal interface, fuel tank 22 could also be formed from left and right housing members joined along a substantially vertical interface, for example, or may be formed from any two or more housing members which may be joined along an interface which is disposed at an angle with respect to horizontal and vertical.

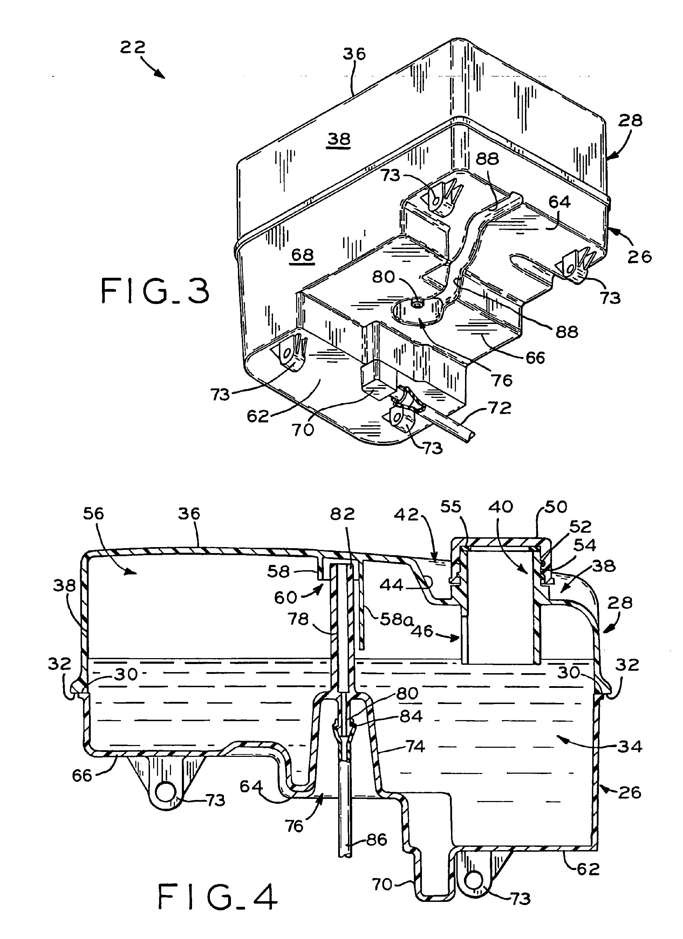

Upper housing member 28 generally includes top wall 36 with side wall 38 depending therefrom. Upper housing member 28 also includes filler neck 38 integrally/monolithically formed therewith which is cylindrically-shaped and, as shown in Fig. 4, includes an upper, threaded portion 40 disposed externally of fuel tank 22 within a recess 42 defined within top wall 36. Recess 42 includes splash guard wall 44 to direct any spilled fuel in a desired direction away from fuel tank 22. Filler neck 38 also includes a lower, baffle portion 46 extending downwardly into interior volume 34 of fuel tank 22.

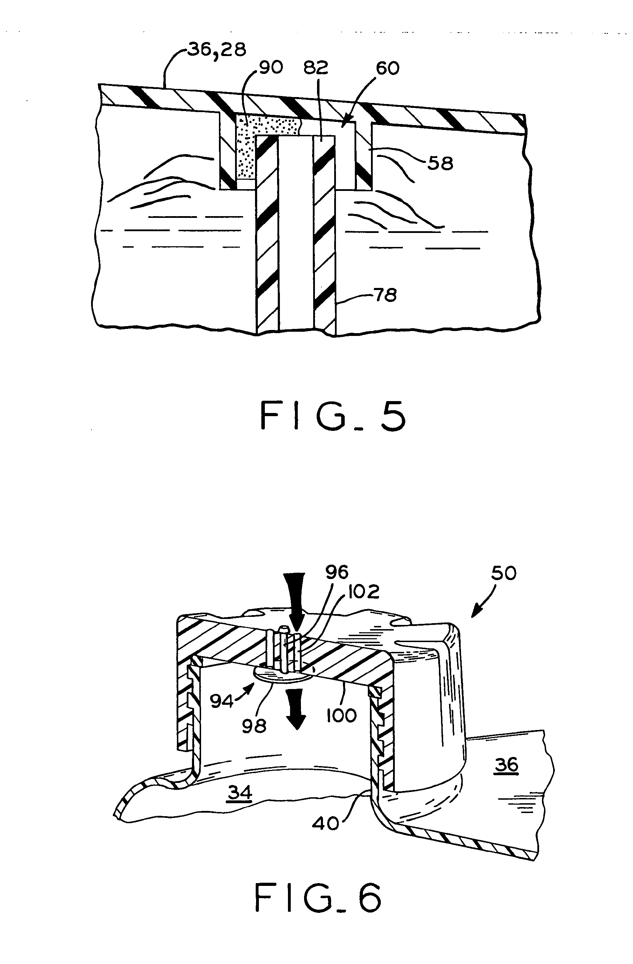

Fuel tank cap 50 includes inner threads 52 for threading attachment to outer threads 54 of filler neck 50 to close fuel tank 22, wherein inner threads 52 of fuel tank cap 50 and outer threads 54 of filler neck 38 form a seal therebetween such that fuel vapors within fuel tank 22 cannot escape through the foregoing threads. Additionally, fuel tank cap 50 may optionally include an O-ring or other seal member 55 for providing a seal between fuel tank cap 50 and filler neck 40. Thus, fuel tank cap 50 is of the "non-venting" type in which fuel vapors cannot vent from internally of fuel tank 22 through fuel tank cap 50. In one embodiment, however, fuel tank cap may include a one-way valve as described below with reference to Fig. 6.

Upper housing member 28 additionally includes a vapor space 56 defined within interior volume 34 of fuel tank 22 above baffle portion 46 of filler neck 40. In use, when a user fills liquid fuel into fuel tank 22, air is trapped within vapor space 56 when the level of fuel rises to the lower end, or just above the lower end, of baffle portion 46 of filler neck 40. The air trapped within vapor space 56 prevents additional fuel from entering vapor space 56, and thereafter, any additional liquid fuel filled into fuel tank 22 rapidly fills up filler neck 40 to indicate to the user that fuel tank 22 is full. In this manner, the level of baffle portion 46 of filler neck 40 defines the maximum fill level for fuel within fuel tank 22.
Vapor space 56 also provides a volume of air within fuel tank 22 in which vapors from the liquid fuel in fuel tank 22 may collect.

Upper housing member 28 further includes baffle wall 58 extending therefrom, which is integrally/monolithically formed with upper housing member 28. Baffle wall 58 may have a circular, square, or other polygonal shape in cross-section, for example, and generally protrudes downwardly from upper housing member 28 to a form baffle recess or space 60 therein, the function of which is described further below.

Lower housing member 26 generally includes a lower bottom wall 62, an upper bottom wall 64, an intermediate wall connecting lower and upper bottom walls 62 and 64, and side wall 68. Lower bottom wall 62 and side wall 68 define a lowermost portion within interior volume 34 of fuel tank 22. Fuel outlet fitting 70 is integrally/monolithically formed within lower bottom wall 62 in fluid communication with the lowermost portion of interior volume 34 of fuel tank 22, and a fuel conduit 72 (Fig. 3) may be attached to fuel outlet fitting 70. In use, liquid fuel within fuel tank 22 drains by gravity through fuel outlet fitting 70 and passes through fuel conduit 72 to fuel bowl 24 of carburetor 20. Fuel tank 22 may also include a water trap (not shown) and/or a water-repellant screen (not shown) mounted over the interior side of fuel outlet fitting 70 of the type disclosed in U.S. Patent No. 6,953,527, assigned to the assignee of the present invention, the disclosure of which is incorporated by reference. A plurality of brackets 73 may be formed integrally with, or otherwise attached to, lower housing member 26 for mounting fuel tank 22 to engine 20.

Lower housing member 26 additionally includes a recessed wall 74 projecting inwardly therein to define a concave or recess space 76 in lower housing member 26, as well as vent tube 78 and vent fitting 80 which are each integrally/monolithically formed with lower housing member 26. Vent tube 78 is generally elongate in shape, and extends generally upwardly from lower housing member 26 into the interior volume 34 of fuel tank 22 and upwardly into vapor space 56. Upon attachment of lower housing member 26 to upper housing member 28 in the manner described above, upper end 82 of vent tube 78 is positioned generally within the baffle space 60 which is defined by baffle member 58 of upper housing member 28. Typically, upper end 82 of vent tube 78 is disposed above the lower end of baffle member 58, as shown in Fig. 5, such that baffle member 58 prevents fuel from splashing into upper end 82 of vent tube 78 when the fuel in fuel tank 22 is agitated, as discussed below.

Vent fitting 80 projects into recess space 76 and is in fluid communication with vent tube 78, and also includes at least one, and preferably a plurality of, barbs 84 therealong for press-fit attachment thereto of vent conduit 86. In this manner, vent fitting 80 is advantageously located within recess space 76 of lower housing member 26, such that the connection between vent conduit 86 and vent fitting 80 is hidden from view and is protected against external contacts or jostling which could potentially disengage vent conduit 84 from vent fitting 80. Optionally, lower housing member 26 may also include a recessed groove 88 (Fig. 3) in which vent conduit 86 may be fitted to protect vent conduit 86 from external contacts, for example.

Advantageously, vent tube 78 and vent fitting 80 are integrally formed with lower housing member 26, thereby obviating the need for additional parts such as a separate vent tube and vent fitting, and also eliminating the need for a connection between a separate vent tube and/or vent fitting with the fuel tank 22 which might be prone to leakage.

Referring generally to Figs. 2-4, operation of fuel tank 22 will now be described. After fuel tank 22 is filled with liquid fuel, some of the liquid fuel may vaporize due to heat from engine 10 and/or from warm ambient conditions, and such vapors will collect within vapor space 56 of fuel tank 22. Fuel vapors may enter baffle space 60 and thence may pass into upper end 82 of vent tube 78. Thereafter, the fuel vapors may pass through vent fitting 80 and vent conduit 82 into a carbon canister (not shown) or other containment device, or may be vented directly to the carburetor. Suitable arrangements for collecting and/or disposing of fuel vapors which are vented from fuel tanks are disclosed in U.S. Patent Application Serial No. 10/656,305, entitled EMISSIONS CONTROL SYSTEM FOR SMALL INTERNAL COMBUSTION ENGINES, filed on September 4, 2003; U.S. Patent Application Serial No. 11/035,655, entitled EVAPORATIVE EMISSIONS CONTROL SYSTEM INCLUDING A CHARCOAL CANISTER FOR SMALL INTERNAL COMBUSTION ENGINES, filed on January 14, 2005; and U.S. Patent Application Serial No. 11/062,955, entitled EVAPORATIVE EMISSIONS CONTROL SYSTEM FOR SMALL INTERNAL COMBUSTION ENGINES, filed on February 22, 2005, each assigned to the assignee of the present invention, the disclosures of which are expressly incorporated herein by reference.

Referring to Fig. 5, when the liquid fuel in fuel tank 22 is agitated, such as during running of engine 22, baffle wall 58 advantageously prevents liquid fuel from entering upper end 82 of vent tube 78 by blocking the liquid fuel in the manner illustrated in Fig. 5. Specifically, because baffle wall 58 extends lower than the upper end 82 of vent tube 78, liquid fuel is blocked from entering the upper portion of baffle space 60 and the upper end 82 of vent tube 78. Optionally, baffle wall 58 may be elongated, as represented at 58a in Fig. 4, wherein baffle wall 58a extends downwardly from upper wall 36 of fuel tank 22 along a substantial extent of the length of vent tube 78 to further prevent fuel from being splashed into baffle space 60. For example, baffle wall 58a may extend to approximately the depth of baffle portion 46 of filler neck 40 to maintain a vapor/air space within baffle space 60 upon filling fuel into tank 22. In this embodiment, because baffle wall 58a may extend beneath the level of fuel in tank 22, baffle wall 58a may include a small vent hole (not shown) near upper wall 36 of fuel tank 22 to allow fuel vapors into baffle space 60 and thence into vent tube 78.

Additionally, either in place of or in addition to baffle wall 58, a fuel blocking element 90 may be positioned within baffle space 60 to prevent the passage of liquid fuel into vent tube 78 when the fuel in fuel tank 22 is agitated and/or when fuel tank 22 is tipped. For example, as shown in Fig. 5, fuel blocking element 90 may be trapped between upper end 82 of vent tube 78, upper wall 36 of fuel tank 22, and baffle wall 58, or fuel blocking element 90 may have an annular shape and may be disposed between upper end 82 of vent tube 78 and baffle wall 58. Alternatively, fuel blocking element 90 may be fitted within the open upper end 82 of vent tube 78. Fuel blocking element 90 may be made from an open-cell porous material which blocks the passage of liquid fuel therethrough yet allows the passage therethrough of gaseous fuel vapors. For example, fuel blocking element 90 may be a foam-type material, or alternatively, may be a porous plastic or porous fiber material of the type available from Porex® Porous Products Group, a division of Porex Corporation of Fairbum, GA. (Porex® is a registered trademark of Porex Technologies Corp.). Still further, an anti-rollover valve (not shown) may be incorporated into baffle space 60 and/or into the upper end 82 of vent tube 78 to prevent liquid fuel from entering vent tube 78 when fuel tank 22 is tipped, for example. One suitable anti-rollover valve is shown and described in the above-incorporated U.S. Patent Application Serial No. 11/062,955.

Under atmospheric pressure conditions, fuel blocking element 90 additionally hinders the passage therethrough of gaseous fuel vapors and air into vent tube 78. As described above, when a user fills liquid fuel into fuel tank 22, air is trapped within vapor space 56 when the level of fuel rises to the lower end, or just above the lower end, of baffle portion 46 of filler neck 40. The air trapped within vapor space 56 prevents additional fuel from entering vapor space 56, and thereafter, any additional liquid fuel filled into fuel tank 22 rapidly fills up filler neck to indicate to the user that fuel tank 22 is full. Vapor space 56 also provides a volume of air within fuel tank 22 in which vapors from the liquid fuel in fuel tank 22 may collect. In use, if the tank 22 is under conditions that generate the build-up of gaseous fuel vapors, the porous construction of fuel blocking element 90 relieves pressure to atmospheric conditions, whereby gaseous fuel vapors may vent through vent tube 78, vent fitting 80, and vent conduit 82 into a carbon canister (not shown) or other containment device, or may be vent directly to carburetor 20.

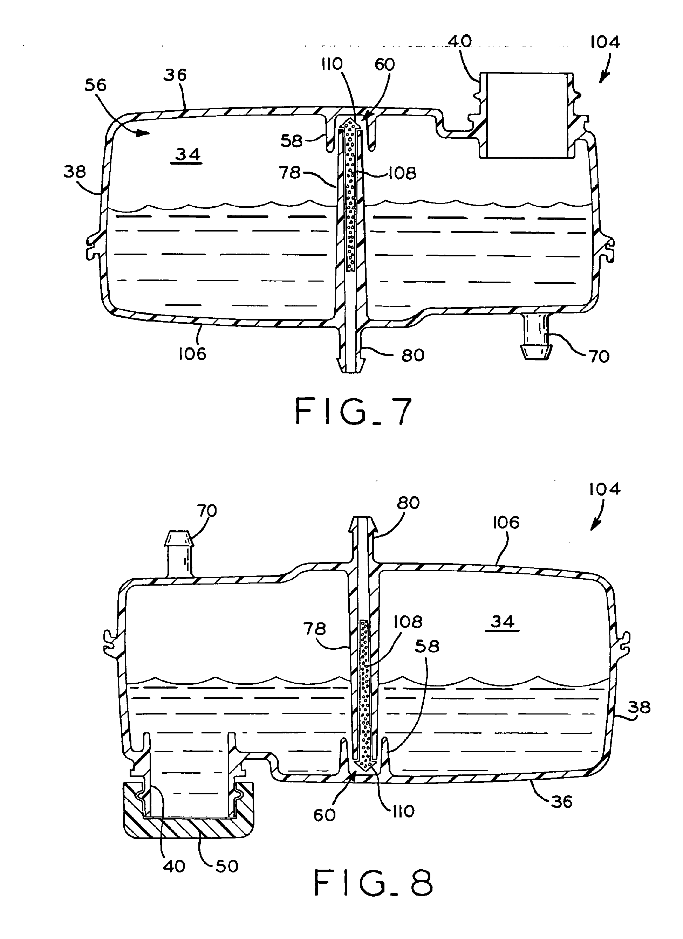

As shown in Fig. 6, fuel tank cap 50 may optionally include a one-way valve 94 to permit the flow of atmospheric air therethrough into fuel tank 22, as described below. Valve 94 may be in the form of a duck-bill or flapper-type valve, for example, including stem portion 96 anchored to fuel tank cap 50 in a suitable manner, and flap portion 98 in sealing engagement with interior wall 100 of fuel tank cap 50 about a passage 102 extending through fuel tank cap 50. Optionally, a porous element (not shown) may be provided within passage 102 to trap particulate materials. In use, as fuel drains from fuel tank 22 during operation of engine 18, atmospheric or make-up air may enter fuel tank 22 through valve 94 as illustrated by the arrows in Fig. 6, wherein vacuum produced within interior volume 34 of fuel tank 22 as fuel drains therefrom deflects flap portion 98 away from interior wall 100 of fuel tank cap 50 to allow atmospheric or make-up air to pass therethrough through passage 102. Also, if fuel tank 22 is substantially tipped or is inverted, as shown in Fig. 8 and described below, such as in connection with tipping lawn mower 10 or another implement with which fuel tank 22 is used, for example, flap portion 98 of valve 94 sealingly engages interior wall 100 of fuel tank cap 50 to prevent leakage of fuel through passage 102 in fuel tank cap 50. When fuel tank cap 50 includes valve 94, pressure associated with build-up of fuel vapors within fuel tank 22 may escape via vent tube 78 as necessary.

Referring to Figs. 7 and 8, a fuel tank 22 in accordance with another embodiment is shown which, except as described below, includes many elements similar to those of fuel tank 22 described above, and identical references numerals have been used in Figs. 7 and 8 to identify identical or substantially identical elements therebetween. Fuel tank 104 includes a relatively planar bottom wall as opposed to the stepped configuration of lower bottom wall 62, upper bottom wall 64, and transition wall 66 of fuel tank 22 described above. However, fuel tank 22 may also include a stepped lower wall configuration similar to that of fuel tank 22, if desired.

Fuel tank 104 includes vent tube 78 having an upper end disposed within baffle space 60 of baffle wall 58 similar to fuel tank 22. However, vent tube 78 of fuel tank 104 includes an elongated porous fuel blocking element 108 disposed therewithin which, as shown in Figs. 7 and 8, may extend from the upper end of vent tube 78 downwardly within vent tube 78 along a substantial portion of the length of vent tube 78. Fuel blocking element 108 may be formed of the same or similar materials as fuel blocking element 90 described above. As shown in Fig. 7, fuel blocking element 108 includes a conical or sloped upper end portion 110 which may overlap the upper end of vent tube 78 such that any liquid fuel which contacts upper end portion 110 of fuel blocking element 108 will flow back down into the main volume of fuel within fuel tank 104 before a substantial portion of the liquid fuel enters the porous structure of fuel blocking element 108.

During normal operation of engine 18, fuel tank 104 is in an upright orientation as shown in Fig. 7. In this orientation, fuel blocking element 108 allows the passage of air and fuel vapors therethrough but blocks the passage of liquid fuel through vent tube 78 should any liquid fuel splash upwardly into vent space 60. When lawnmower 10 or another implement with which engine 18 and fuel tank 22 are used is tipped, such as to an inverted orientation shown in Fig. 8 or to an angled orientation between the upright orientation shown in Fig. 7 and the inverted orientation shown in Fig. 8, the fuel within fuel tank 104 will move by gravity to the upper end of fuel tank 104. However, in this orientation of fuel tank 104, the fuel is blocked from leaking outwardly of filler neck 40 by fuel tank cap 50, which may include a one-way valve 94 as described above with reference to Fig. 6. Also, fuel is prevented from leaking outwardly of vent tube 78, as vent fitting 80 of vent tube 78 will be above the level of fuel in tank 22. Fuel blocking element 108 may be configured to extend within vent tube 78 along a significant extent of the length of vent tube 78 to substantially fill the interior of vent tube 78 and to obstruct fuel flow through vent tube 78 such that, as shown in Fig. 8, the amount of fuel that can collect in vent tube is minimized. In this manner, even when fuel tank 104 is inverted, fuel blocking element 108 substantially prevents liquid fuel from passing therethrough through vent tube 78.

In a further embodiment (not shown), fuel tank 22 or 104 may include a horizontal baffle wall toward the upper portion thereof which includes a plurality of openings therein to allow fuel to be filled into the lower portion of the fuel tank beneath the baffle wall. Such baffle wall would provide an additional barrier against potential splashing of fuel into baffle space 60 and/or vent tube 78.

While this invention has been described as having a preferred design, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. A fuel tank (22) including at least two housing members (26, 28) joined to one another to define an interior volume (34) therebeween, **characterized by** an elongated vent tube (78) monolithically formed with one of said housing members and extending therefrom within said interior volume.

2. The fuel tank (22) of Claim 1, **characterized by** a fuel blocking element (90, 108) associated with said vent tube (78), said fuel blocking element substantially blocking the passage of liquid fuel therethrough into said vent tube and allowing the passage therethrough of gaseous fuel vapors when pressure in said fuel tank rises above atmospheric pressure.

3. The fuel tank (22) of Claim 2, **characterized in that** said fuel blocking element (90, 108) extends within said vent tube (78) along a substantial portion of a length of said vent tube.

4. The fuel tank (22) of Claim 1, **characterized in that** another of said housing members (26, 28) includes a baffle wall (58) disposed within said interior volume (34), said baffle wall defining a baffle space (60), an end (82) of said vent tube (78) disposed within said baffle space.

5. The fuel tank (22) of Claim 4, **characterized by** a fuel blocking element (90, 108) associated with said vent tube (78), said fuel blocking element at least one of:
disposed within an open upper end (82) of said vent tube;
disposed within said baffle space (60); and
disposed around said vent tube.

6. The fuel tank (22) of Claim 1, **characterized in that** said one housing member (26, 28) includes a wall (74) recessed into said interior volume (34) to define a recessed space (76) exteriorly of said interior volume, said vent tube (78) extending from said wall into said interior volume.

7. The fuel tank (22) of Claim 6, **characterized in that** said one housing member (26, 28) further includes a fitting (80) monolithically formed therewith, said fitting disposed within said recessed space (76) and in fluid communication with said vent tube (78).

8. The fuel tank (22) of Claim 1, **characterized in that** said fuel tank further comprises a filler neck (38), said filler neck having a lower end (46) disposed within said interior volume (34) and defining a maximum fuel level within said fuel tank.

9. The fuel tank (22) of Claim 1, **characterized in that** said fuel tank further comprises a fuel tank cap (50), said fuel tank cap including a one-way valve (94) therein allowing passage of atmospheric air therethrough into said fuel tank and preventing the passage of air therethrough from said fuel tank to the atmosphere.
